# EUROPÄISCHE PATENTSCHRIFT

(11) **EP 3 520 612 B1**
(45) Veröffentlichungstag und Bekanntmachung des Hinweises auf die Patenterteilung: **13.10.2021**
(21) Anmeldenummer: 19155432.8
(22) Anmeldetag: 05.02.2019
(51) Int. Cl.: A01M 7/00

(54) **VERFAHREN ZUM AUSBRINGEN EINER SPRITZFLÜSSIGKEIT**
METHOD FOR APPLICATION OF A LIQUID TO BE SPRAYED
PROCÉDÉ D'APPLICATION D'UN FLUIDE DE PULVÉRISATION

(30) Priorität: 06.02.2018 DE 102018102586
(43) Veröffentlichungstag der Anmeldung: 07.08.2019
(73) Patentinhaber: Amazonen-Werke H. Dreyer SE & Co. KG, 49205 Hasbergen (DE)
(72) Erfinder: KALKMANN, Helmke, 49076 Osnabrück (DE)

(56) Entgegenhaltungen:
- EP-A1- 3 167 712
- EP-A1- 3 348 142
- WO-A1-89/10050
- WO-A1-2014/200896
- DE-A1-102007 012 796
- US-A- 5 248 086
- US-A1- 2014 361 094

## Beschreibung

Die Erfindung betrifft ein Verfahren zum Ausbringen einer Spritzflüssigkeit nach dem Oberbegriff des Patentanspruchs 1 und ein landwirtschaftliches Spritzgerät nach dem Oberbegriff des Patentanspruchs 16.

Zum Ausbringen von Spritzflüssigkeit sind landwirtschaftliche Spritzgeräte bekannt, welche über ein sogenanntes Direkteinspeisesystem verfügen. Bei derartigen Direkteinspeisesystemen wird eine in einem Vorratsbehälter bevorratete Trägerflüssigkeit innerhalb eines Leitungssystems mit einem direkt eingespeisten Wirkstoff vermischt, um eine flüssige Wirkstoffmischung zu erzeugen.

Aus der Druckschrift DE 10 2004 047 585 A1 ist beispielsweise ein System zur Direkteinspeisung von Wirkstoffen in eine Trägerflüssigkeit bekannt, bei welchem in einem Vormischbehälter eine vorverdünnte Wirkstoffmischung erzeugt wird. Die vorverdünnte Wirkstoffmischung wird innerhalb des Gestänges mit der Trägerflüssigkeit zu einer auszubringenden Spritzbrühe vermischt.

Weitere Direkteinspeisesysteme sind beispielsweise aus den Dokumenten DE 10 2006 045 450 A1 und DE 10 2006 059 193 A1 bekannt.

Darüber hinaus ist in der WO 89 10050 A ein Direkteinspeisesystem bekannt, bei der die Trägerflüssigkeit aus dem Vorratsbehälter zu einem Umwälzkreislauf geleitet und mit dem im Umwälzkreislauf direkt eingespeisten Wirkstoff vermischt wird. Die auszubringende Spritzbrühe wird hierbei anschließend über Ausbringdüsen, die an einer von dem Umwälzkreislauf abzweigenden Auslaufleitung angeordnet sind, ausgebracht. Ein weiteres System zur Ausbringung von Spritzflüssigkeit ist aus DE 10 2007 012796 A1 bekannt. Das System umfasst mehrere Umlaufleitungen, in denen eine Spritzflüssigkeit durch eine Umwälzpumpe umgewälzt wird.

Die bekannten Lösungen für Direkteinspeisesysteme haben jedoch den Nachteil, dass der eingespeiste Wirkstoff regelmäßig erst mit einer erheblichen Verzögerung an den Ausbringdüsen ankommt, sodass bei einer Veränderung der Wirkstoffkonzentration, insbesondere beim Ein- und Ausschalten der Wirkstoffeinspeisung, eine Fehlausbringung verursacht wird. Die Fehlausbringung führt letztendlich zu verringerten Erträgen und/oder zu einem gesteigerten Aufwand.

Die der Erfindung zugrundeliegende Aufgabe besteht somit darin, die Ausbringverzögerung bei Direkteinspeisesystemen, welche beim Anpassen der Wirkstoffkonzentration auftritt, zu reduzieren.

Die Aufgabe wird durch ein Verfahren zum Ausbringen einer Spritzflüssigkeit mit den Merkmalen des Anspruchs 1 gelöst. Ferner wird die Aufgabe durch ein landwirtschaftliches Spritzgerät mit den Merkmalen des Anspruchs 16 gelöst.

Dadurch, dass die flüssige Wirkstoffmischung in dem Umwälzkreislauf zirkuliert und der Umwälzkreislauf mit mehreren Ausbringelementen fluidleitend verbindbar ist, kann vor der eigentlichen Ausbringung der flüssigen Wirkstoffmischung innerhalb des Umwälzkreislaufs eine flüssige Wirkstoffmischung mit der gewünschten Wirkstoffkonzentration erzeugt werden, welche durch die Umwälzung zu Beginn des Ausbringvorgangs dann unmittelbar an sämtlichen Ausbringelementen bereitsteht. Eine Fehlausbringung, das heißt die Ausbringung einer flüssigen Wirkstoffmischung mit einer falschen Wirkstoffkonzentration, wird hierdurch effektiv vermieden. Die flüssige Wirkstoffmischung entspricht der auszubringenden Spritzflüssigkeit. Insbesondere umfasst das Verfahren das Verteilen der auszubringenden Spritzflüssigkeit oder der flüssigen Wirkstoffmischung auf die mehreren Ausbringelemente, wobei die mehreren Ausbringelemente vorzugsweise als Spritzdüsen ausgebildet sind. Insbesondere umfasst der Umwälzkreislauf nicht den Vorratsbehälter für die Trägerflüssigkeit. Hierdurch wird vermieden, dass Wirkstoff, welcher bereits mit der Trägerflüssigkeit zu einer flüssigen Wirkstoffmischung vermischt wurde, zurück in den Vorratsbehälter geleitet wird. Eine Vermischung der in dem Vorratsbehälter bevorrateten Trägerflüssigkeit mit dem Wirkstoff wird auf diese Weise effektiv vermieden.

Erfindungsgemäß umfasst das Erzeugen der flüssigen Wirkstoffmischung durch Vermischen der Trägerflüssigkeit mit dem Wirkstoff das Einspeisen des Wirkstoffs in den Umwälzkreislauf. Vorzugsweise erfolgt die Vermischung der Trägerflüssigkeit mit dem Wirkstoff zu der flüssigen Wirkstoffmischung innerhalb einer oder mehrerer Mischkammern, wobei die eine oder die mehreren Mischkammern Bestandteile des Umwälzkreislaufs sind. Der Umwälzkreislauf umfasst mehrere Zirkulationspfade.

Außerdem ist ein erfindungsgemäßes Verfahren bevorzugt, bei welchem das Einspeisen des Wirkstoffs in den Umwälzkreislauf in einem ersten Betriebsmodus des landwirtschaftlichen Spritzgeräts erfolgt, währenddessen sämtliche Ausbringelemente geschlossen sind und/oder die fluidleitende Verbindung zwischen dem Umwälzkreislauf und sämtlichen Ausbringelementen unterbrochen ist. Der erste Betriebsmodus betrifft vorzugsweise das Initiieren eines Ausbringvorgangs, bei welchem innerhalb des Umwälzkreislaufs zunächst die gewünschte Wirkstoffkonzentration erzeugt wird, bevor die Ausbringelemente geöffnet und/oder die fluidleitende Verbindung zwischen dem Umwälzkreislauf und den Ausbringelementen freigegeben werden. Da das Volumen in den Leitungen des Umwälzkreislaufs bekannt ist, kann vor dem Öffnen der Ausbringelemente und/oder dem Freigeben der fluidleitenden Verbindung zwischen dem Umwälzkreislauf und den Ausbringelementen Wirkstoff im gewünschten Verhältnis eingespeist werden, sodass durch die Zirkulation vor dem eigentlichen Ausbringvorgang eine homogene Durchmischung erfolgt. In diesem Fall steht nach kurzer Zeit die beabsichtigte Mischung im Umwälzkreislauf bereit und es kann ohne Latenz begonnen werden zu spritzen.

In einer anderen Ausführungsform des erfindungsgemäßen Verfahrens erfolgt das Einspeisen des Wirkstoffs in den Umwälzkreislauf in einem zweiten und/oder dritten Betriebsmodus des landwirtschaftlichen Spritzgeräts, währenddessen einzelne oder sämtliche Ausbringelemente geöffnet sind und/oder die fluidleitende Verbindung zwischen dem Umwälzkreislauf und einzelnen oder sämtlichen Ausbringelementen freigegeben ist. Der zweite Betriebsmodus betrifft vorzugsweise das Erhöhen des Wirkstoffanteils der auszubringenden Spritzflüssigkeit. Der dritte Betriebsmodus betrifft vorzugsweise das Verringern des Wirkstoffanteils der auszubringenden Spritzflüssigkeit. Während des zweiten Betriebsmodus und/oder des dritten Betriebsmodus soll der Wirkstoffanteil der auszubringenden Spritzflüssigkeit während des Ausbringvorgangs geändert werden. In diesem Fall kann also kein temporäres Schließen der Ausbringelemente und/oder Unterbrechen der fluidleitenden Verbindung zwischen dem Umwälzkreislauf und den Ausbringelementen umgesetzt werden. Dennoch führt die Zirkulation innerhalb des Umwälzkreislaufs zu einer beschleunigten Durchmischung und somit zu einer verkürzten Bereitstellungszeit für die gewünschte Spritzflüssigkeit.

In einer Weiterbildung des erfindungsgemäßen Verfahrens weicht in dem zweiten und/oder dritten Betriebsmodus des landwirtschaftlichen Spritzgeräts das Verhältnis der in den Umwälzkreislauf eingespeisten Menge an Trägerflüssigkeit und Wirkstoff zumindest temporär von dem für die Ausbringung beabsichtigten Mischungsverhältnis ab. Das Verhältnis von der in den Umwälzkreislauf eingespeister Trägerflüssigkeit zu dem in den Umwälzkreislauf eingespeisten Wirkstoff entspricht somit zumindest temporär nicht dem Verhältnis von Trägerflüssigkeit und Wirkstoff der gewünschten auszubringenden Spritzflüssigkeit. Auf diese Weise wird die Erzeugung des gewünschten Mischungsverhältnisses innerhalb des Umwälzkreislaufs beschleunigt. Die lokale und temporäre übermäßige oder verminderte Einspeisung von Wirkstoff wird durch den Zirkulationseffekt ausgeglichen, sodass die Bereitstellung einer auszubringenden Spritzflüssigkeit mit dem gewünschten Mischungsverhältnis beschleunigt wird.

Darüber hinaus ist ein erfindungsgemäßes Verfahren vorteilhaft, bei welchem in dem zweiten Betriebsmodus des landwirtschaftlichen Spritzgeräts die Abweichung des Verhältnisses der in den Umwälzkreislauf eingespeisten Menge an Trägerflüssigkeit und Wirkstoff von dem für die Ausbringung beabsichtigten Mischungsverhältnis durch eine übermäßige und/oder überproportionale Einspeisung des Wirkstoffs verursacht wird. Die übermäßige und/oder überproportionale Einspeisung des Wirkstoffs bezieht sich auf die notwendige Menge zur Umsetzung der gewünschten Erhöhung des Wirkstoffanteils in der auszubringenden Spritzflüssigkeit. Durch die übermäßige und/oder überproportionale Einspeisung des Wirkstoffs in den Umwälzkreislauf ergibt sich temporär an einer oder mehreren Stellen des Umwälzkreislaufs eine flüssige Wirkstoffmischung, deren Wirkstoffkonzentration oberhalb der gewünschten Wirkstoffkonzentration liegt. Durch die Umwälzung innerhalb des Umwälzkreislaufs erfolgt jedoch eine Durchmischung mit der innerhalb des Umwälzkreislaufs befindlichen Flüssigkeit, sodass die erhöhte Konzentration im Wesentlichen aufgelöst oder zumindest verringert ist, bevor die entsprechenden Flüssigkeitsmengen die Ausbringelemente erreichen.

Ferner ist ein erfindungsgemäßes Verfahren vorteilhaft, bei welchem die übermäßige und/oder überproportionale Einspeisung des Wirkstoffs in dem zweiten Betriebsmodus des landwirtschaftlichen Spritzgeräts ab einem Schaltzeitpunkt verringert oder unterbrochen wird, sodass durch die einzelnen oder sämtlichen geöffneten und/oder freigegebenen Ausbringelemente zu keiner Zeit oder lediglich temporär eine Spritzflüssigkeit mit überhöhtem Wirkstoffanteil ausgebracht wird. Eine dauerhafte übermäßige und/oder überproportionale Einspeisung des Wirkstoffs würde letztendlich zu der Ausbringung einer Spritzflüssigkeit führen, welche einen überhöhten Wirkstoffanteil aufweist. Um dies zu verhindern, wird die übermäßige und/oder überproportionale Einspeisung des Wirkstoffs ab einem Schaltzeitpunkt verringert oder unterbrochen, sodass weiterhin eine beschleunigte Erzeugung des gewünschten Mischungsverhältnisses innerhalb des Umwälzkreislaufs beibehalten wird, eine Fehlausbringung aufgrund der übermäßigen und/oder überproportionalen Einspeisung des Wirkstoffs jedoch lediglich kurzzeitig nach Einstellung des zweiten Betriebsmodus erfolgt oder sogar im Wesentlichen ausbleibt.

Außerdem ist ein erfindungsgemäßes Verfahren bevorzugt, bei welchem in dem dritten Betriebsmodus des landwirtschaftlichen Spritzgeräts die Abweichung des Verhältnisses der in den Umwälzkreislauf eingespeisten Menge an Trägerflüssigkeit und Wirkstoff von dem für die Ausbringung beabsichtigten Mischungsverhältnis durch eine übermäßig verminderte und/oder unterproportionale Einspeisung des Wirkstoffs verursacht wird. Die übermäßig verminderte und/oder unterproportionale Einspeisung des Wirkstoffs bezieht sich auf die notwendige Wirkstoffreduktion zur Umsetzung der gewünschten Verringerung des Wirkstoffanteils in der auszubringenden Spritzflüssigkeit. Durch die übermäßig verminderte und/oder unterproportionale Einspeisung des Wirkstoffs in den Umwälzkreislauf ergibt sich temporär an einer oder mehreren Stellen des Umwälzkreislaufs eine flüssige Wirkstoffmischung, deren Wirkstoffkonzentration unterhalb der gewünschten Wirkstoffkonzentration liegt. Durch die Umwälzung innerhalb des Umwälzkreislaufs erfolgt jedoch eine Durchmischung mit der innerhalb des Umwälzkreislaufs befindlichen Flüssigkeit, sodass die zu geringe Konzentration im Wesentlichen aufgelöst oder zumindest verringert ist, bevor die entsprechenden Flüssigkeitsmengen die Ausbringelemente erreichen.

In einer Weiterbildung des erfindungsgemäßen Verfahrens wird die übermäßig verminderte und/oder unterproportionale Einspeisung des Wirkstoffs in dem dritten Betriebsmodus des landwirtschaftlichen Spritzgeräts ab einem Schaltzeitpunkt verringert oder unterbrochen, sodass durch die einzelnen oder sämtlichen geöffneten und/oder freigegebenen Ausbringelemente zu keiner Zeit oder lediglich temporär eine Spritzflüssigkeit mit übermäßig vermindertem Wirkstoffanteil ausgebracht wird. Eine dauerhafte übermäßig verminderte und/oder unterproportionale Einspeisung des Wirkstoffs würde letztendlich zu der Ausbringung einer Spritzflüssigkeit führen, welche einen zu geringen Wirkstoffanteil aufweist. Um dies zu verhindern, wird die übermäßig verminderte und/oder unterproportionale Einspeisung des Wirkstoffs ab einem Schaltzeitpunkt verringert oder unterbrochen, sodass weiterhin eine beschleunigte Erzeugung des gewünschten Mischungsverhältnisses innerhalb des Umwälzkreislaufs beibehalten wird, eine Fehlausbringung aufgrund der übermäßig verminderten und/oder unterproportionalen Einspeisung des Wirkstoffs jedoch lediglich kurzzeitig nach Einstellung des dritten Betriebsmodus erfolgt oder sogar im Wesentlichen ausbleibt.

In einer anderen Ausführungsform des erfindungsgemäßen Verfahrens wird das Mischungsverhältnis und/oder der Mischungszustand der innerhalb des Umwälzkreislaufs befindlichen Flüssigkeit erfasst und/oder das Mischungsverhältnis und/oder der Mischungszustand der innerhalb des Umwälzkreislaufs befindlichen Flüssigkeit gespeichert. Das Erfassen und/oder Speichern des Mischungsverhältnisses und/oder des Mischungszustands der innerhalb des Umwälzkreislaufs befindlichen Flüssigkeit erfolgt vorzugsweise vor dem Unterbrechen des Einspeisens des Wirkstoffs in den Umwälzkreislauf. Der Mischungszustand der innerhalb des Umwälzkreislaufs befindlichen Flüssigkeit zeigt an, ob sich in dem Umwälzkreislauf Klarwasser, Trägerflüssigkeit oder eine flüssige Wirkstoffmischung aus der Trägerflüssigkeit und dem Wirkstoff befindet.

In einer weiteren Ausführungsform des erfindungsgemäßen Verfahrens erfolgt nach dem Unterbrechen des Einspeisens des Wirkstoffs in den Umwälzkreislauf das Entfernen der Flüssigkeit aus dem Umwälzkreislauf, insbesondere durch Verursachen einer Fließrichtungsumkehr innerhalb des Umwälzkreislaufs. Das Verursachen der Fließrichtungsumkehr innerhalb des Umwälzkreislaufs kann passiv durch eine oder mehrere Fördereinrichtungen des Umwälzkreislaufs hindurch erfolgen, beispielsweise, wenn die eine oder die mehreren Fördereinrichtungen als Flügelradpumpen ausgebildet sind. Alternativ kann das Verursachen der Fließrichtungsumkehr innerhalb des Umwälzkreislaufs aktiv durch Öffnen eines Bypasses im Bereich der einen oder der mehreren Fördereinrichtungen oder durch Invertieren der Förderrichtung der einen oder der mehreren Fördereinrichtungen des Umwälzkreislaufs erfolgen.

Das erfindungsgemäße Verfahren wird außerdem dadurch vorteilhaft weitergebildet, dass vor dem Einspeisen und/oder während des Einspeisens des Wirkstoffs in den Umwälzkreislauf ein gespeichertes Mischungsverhältnis und/oder ein gespeicherter Mischungszustand der innerhalb des Umwälzkreislaufs befindlichen Flüssigkeit abgerufen und/oder bei der Ermittlung einer geeigneten Einspeisemenge an Wirkstoff berücksichtigt wird. Innerhalb des Umwälzkreislaufs kann eine oder können mehrere Ventile angeordnet sein, welche ein Zurückströmen der innerhalb des Umwälzkreislaufs befindlichen Flüssigkeit verhindern.

In einer vorteilhaften Ausführungsform des erfindungsgemäßen Verfahrens entspricht in einem vierten Betriebsmodus des landwirtschaftlichen Spritzgeräts das Verhältnis der in den Umwälzkreislauf eingespeisten Menge an Trägerflüssigkeit und Wirkstoff zumindest temporär dem für die Ausbringung beabsichtigten Mischungsverhältnis. Der vierte Betriebsmodus betrifft das Konstanthalten des Wirkstoffanteils der auszubringenden Spritzflüssigkeit, beispielsweise, wenn das landwirtschaftliche Spritzgerät ohne Geschwindigkeitsvariation und die Notwendigkeit einer Wirkstoffkonzentrationsanpassung Spritzflüssigkeit ausbringt.

Erfindungsgemäß weist der Umwälzkreislauf mehrere Fördereinrichtungen auf. Da der Umwälzkreislauf mehrere Zirkulationspfade aufweist, können die einzelnen Zirkulationspfade jeweils eine oder mehrere Fördereinrichtungen aufweisen. Bei der Reinigung des Umwälzkreislaufs, beispielsweise mit Klarwasser, kann ein Verdünnungseffekt einsetzen, welcher zu längeren Reinigungszeiten führt. Durch eine Invertierung der Förderrichtung der mehreren Fördereinrichtungen kann der Umwälzkreislauf effektiv gespült werden, ohne dass ein solcher Verdünnungseffekt auftritt. Insbesondere das Entfernen der Flüssigkeit aus dem Umwälzkreislauf durch Verursachen einer Fließrichtungsumkehr innerhalb des Umwälzkreislaufs kann durch das Umkehren der Förderungsrichtung der mehreren Fördereinrichtungen erreicht werden.

Außerdem ist ein erfindungsgemäßes Verfahren bevorzugt, bei welchem das Verursachen der Fließrichtungsumkehr innerhalb des Umwälzkreislaufs durch ein Umkehren der Förderrichtung der einen oder der mehreren Fördereinrichtungen des Umwälzkreislaufs erfolgt. Alternativ kann das Verursachen der Fließrichtungsumkehr innerhalb des Umwälzkreislaufs durch die Freigabe einer Bypassleitung im Bereich der jeweiligen Fördereinrichtung des Umwälzkreislaufs erfolgen. Innerhalb der Bypassleitungen kann jeweils eine Sperreinrichtung angeordnet sein, mittels welcher die jeweilige Bypassleitung gesperrt und freigegeben werden kann.

In einer weiteren Ausführungsform des erfindungsgemäßen Verfahrens sind die mehreren Fördereinrichtungen in dem ersten, zweiten, dritten und/oder vierten Betriebsmodus des landwirtschaftlichen Spritzgeräts aktiviert. Dadurch, dass die mehreren Fördereinrichtungen aktiviert sind, erfolgt eine konstante Umwälzung der Flüssigkeit innerhalb des Umwälzkreislaufs, wodurch eine kontinuierliche Durchmischung und somit ein homogener Mischungszustand innerhalb des Umwälzkreislaufs gewährleistet wird.

In einer Weiterbildung des erfindungsgemäßen Verfahrens erfolgt in einem fünften Betriebsmodus des landwirtschaftlichen Spritzgeräts kein Einspeisen des Wirkstoffs in den Umwälzkreislauf, währenddessen die mehreren Fördereinrichtungen deaktiviert und gleichzeitig einzelne oder sämtliche Ausbringelemente geöffnet sind und/oder die fluidleitende Verbindung zwischen dem Umwälzkreislauf und einzelnen oder sämtlichen Ausbringelementen freigegeben ist. Der fünfte Betriebsmodus betrifft vorzugsweise das Ausschalten der Wirkstoffeinspeisung. Dadurch, dass die mehreren Fördereinrichtungen deaktiviert sind, findet keine Umwälzung innerhalb des Umwälzkreislaufs statt, sodass ein Abklingen der Konzentration des Wirkstoffs innerhalb des Umwälzkreislaufs vermieden wird. In diesem Fall wird ein Applikations-V hingenommen, da dieses beim Abschalten deutlich weniger relevant ist als beim Einschalten. Zur Reinigung des Systems können die mehreren Fördereinrichtungen dann aktiviert werden, um den Umwälzkreislauf zu spülen.

Die der Erfindung zugrundeliegende Aufgabe wird ferner durch ein landwirtschaftliches Spritzgerät der eingangs genannten Art gelöst, wobei das landwirtschaftliche Spritzgerät zum Ausführen des Verfahrens zum Ausbringen einer Spritzflüssigkeit nach einer der vorstehend beschriebenen Ausführungsformen ausgebildet ist. Hinsichtlich der Vorteile und Modifikationen des erfindungsgemäßen landwirtschaftlichen Spritzgeräts wird zunächst auf die Vorteile und Modifikationen des erfindungsgemäßen Verfahrens verwiesen.

Die Spritzflüssigkeit, welche von dem landwirtschaftlichen Spritzgerät ausgebracht wird, entspricht vorzugsweise der flüssigen Wirkstoffmischung. Der Umwälzkreislauf des erfindungsgemäßen landwirtschaftlichen Spritzgeräts kann eine oder mehrere Mischkammern zum Vermischen der Trägerflüssigkeit mit dem Wirkstoff zu einer flüssigen Wirkstoffmischung umfassen.

Weitere Einzelheiten der Erfindung sind der Figurenbeschreibung und den Zeichnungen zu entnehmen. Es zeigen
- Fig. 1: ein Ausführungsbeispiel des erfindungsgemäßen landwirtschaftlichen Spritzgeräts in einer schematischen Darstellung; und
- Fig. 2: ein weiteres Ausführungsbeispiel des erfindungsgemäßen landwirtschaftlichen Spritzgeräts in einer schematischen Darstellung.

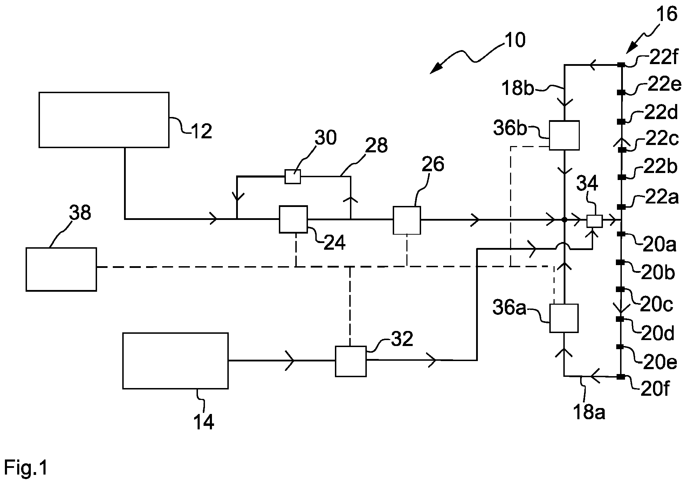

Die Fig. 1 zeigt ein landwirtschaftliches Spritzgerät 10 mit einem Vorratsbehälter 12 für eine Trägerflüssigkeit, einem Vorratsbehälter 14 für einen Wirkstoff und mehreren Ausbringelementen 20a-20f, 22a-22f zu Ausbringen einer Spritzflüssigkeit.

Beim Ausbringen der Spritzflüssigkeit wird die Trägerflüssigkeit aus dem Vorratsbehälter 12 und der Wirkstoff aus dem Vorratsbehälter 14 in einen mit dem Vorratsbehälter 12 und dem Vorratsbehälter 14 fluidleitend verbundenen Umwälzkreislauf 16 geleitet.

Der Umwälzkreislauf 16 umfasst insgesamt zwei Zirkulationspfade 18a, 18b, wobei die Ausbringelemente 20a-20f entlang des Zirkulationspfads 18a und die Ausbringelemente 22a-22f entlang des Zirkulationspfads 18b angeordnet sind. Die Ausbringelemente 20a-20f, 22a-22f sind als Spritzdüsen ausgebildet und fluidleitend mit dem Umwälzkreislauf 16 verbunden.

Die Trägerflüssigkeit aus dem Vorratsbehälter 12 wird zum Einspeisen in den Umwälzkreislauf 16 durch die als Pumpe ausgebildete Fördereinrichtung 24 in Richtung einer Mischkammer 34 gefördert. Der Wirkstoff aus dem Vorratsbehälter 14 wird zum Einspeisen in den Umwälzkreislauf 16 durch die als Pumpe ausgebildete Fördereinrichtung 32 in Richtung der Mischkammer 34 gefördert. Innerhalb der Mischkammer 34 wird durch Vermischen der Trägerflüssigkeit mit dem Wirkstoff eine flüssige Wirkstoffmischung erzeugt. Die Mischkammer 34 ist fluidleitend mit den Zirkulationspfaden 18a, 18b des Umwälzkreislaufs 16 verbunden.

Innerhalb des Zirkulationspfads 18a des Umwälzkreislaufs 16 ist eine als Pumpe ausgebildete Fördereinrichtung 36a angeordnet. Innerhalb des Zirkulationspfads 18b des Umwälzkreislaufs 16 ist eine als Pumpe ausgebildete Fördereinrichtung 36b angeordnet. Die Fördereinrichtungen 36a, 36b innerhalb des Umwälzkreislaufs 16 sorgen für eine Zirkulation der flüssigen Wirkstoffmischung in dem Umwälzkreislauf 16, wodurch eine weitere Vermischung oder die Aufrechterhaltung eines vorliegenden Mischungszustands umgesetzt wird. Die in dem Umwälzkreislauf 16 zirkulierende flüssige Wirkstoffmischung wird den Ausbringelementen 20a-20f, 22a-22f dann als auszubringende Spritzflüssigkeit bereitgestellt. Während der Zirkulation bzw. während des Umwälzens der Flüssigkeit innerhalb des Umwälzkreislaufs 16 wird der Rückfluss von dem Umwälzkreislauf 16 in den Vorratsbehälter 12 verhindert. Alternativ oder zusätzlich kann eine Rückflussleitung von dem Umwälzkreislauf 16 in den Vorratsbehälter 12 während der Zirkulation bzw. während des Umwälzens der Flüssigkeit innerhalb des Umwälzkreislaufs 16 freigegeben sein, sodass ein Rückfluss von dem Umwälzkreislauf 16 in den Vorratsbehälter 12 erfolgt.

Über die Steuerungseinrichtung 38, welche signalleitend mit den Fördereinrichtungen 26, 32, 36a, 36b sowie einer Durchflussmesseinrichtung 26 verbunden ist, können unter anderem die folgenden fünf Betriebsmodi eingestellt werden:
In einem ersten Betriebsmodus, welche zum Initiieren eines Ausbringvorgangs eingestellt wird, erfolgt das Einspeisen des Wirkstoffs in den Umwälzkreislauf 16, währenddessen sämtliche Ausbringelemente 20a-20f, 22a-22f geschlossen sind oder die fluidleitenden Verbindungen zwischen dem Umwälzkreislauf 16 und sämtlichen Ausbringelementen 20a-20f, 22a-22f unterbrochen sind. Da das Volumen in den Leitungen des Umwälzkreislaufs 16 bekannt ist, kann im gewünschten Verhältnis Wirkstoff eingespeist werden. Durch die Zirkulation erfolgt eine homogene Durchmischung, sodass nach kurzer Zeit die beabsichtigte Mischung im Umwälzkreislauf 16 bereitsteht und der Ausbringvorgang gestartet werden kann. Die Fördereinrichtungen 36a, 36b in dem Umwälzkreislauf 16 sind in dem ersten Betriebsmodus aktiviert.

Vor der Einstellung des ersten Betriebsmodus kann das vorliegende Mischungsverhältnisses der innerhalb des Umwälzkreislaufs 16 befindlichen Flüssigkeit erfasst und gespeichert worden sein, sodass vor dem Einspeisen und während des Einspeisens des Wirkstoffs in den Umwälzkreislauf 16 während des Ausführens des ersten Betriebsmodus das zuvor erfasste Mischungsverhältnis der innerhalb des Umwälzkreislaufs 16 befindlichen Flüssigkeit bei der Ermittlung einer geeigneten Einspeisemenge an Wirkstoff berücksichtigt werden kann.

In einem zweiten Betriebsmodus, welcher zum Erhöhen des Wirkstoffanteils der auszubringenden Spritzflüssigkeit eingestellt wird, erfolgt das Einspeisen des Wirkstoffs in den Umwälzkreislauf 16, währenddessen einzelne oder sämtliche Ausbringelemente 20a-20f, 22a-22f geöffnet sind oder die fluidleitenden Verbindungen zwischen dem Umwälzkreislauf 16 und einzelnen oder sämtlichen Ausbringelementen 20a-20f, 22a-22f freigegeben sind. Das Verhältnis der in den Umwälzkreislauf 16 eingespeisten Menge an Trägerflüssigkeit und Wirkstoff weicht im zweiten Betriebsmodus temporär von dem für die Ausbringung beabsichtigten Mischungsverhältnis ab, wobei die Abweichung des Verhältnisses der in den Umwälzkreislauf 16 eingespeisten Menge an Trägerflüssigkeit und Wirkstoff von dem für die Ausbringung beabsichtigten Mischungsverhältnis durch eine übermäßige und überproportionale Einspeisung des Wirkstoffs verursacht wird. Die übermäßige und überproportionale Einspeisung des Wirkstoffs wird ab einem Schaltzeitpunkt verringert, sodass durch die einzelnen oder sämtlichen geöffneten oder freigegebenen Ausbringelemente 20a-20f, 22a-22f lediglich temporär eine Spritzflüssigkeit mit überhöhtem Wirkstoffanteil ausgebracht wird. Die Fördereinrichtungen 36a, 36b in dem Umwälzkreislauf 16 sind in dem zweiten Betriebsmodus aktiviert.

In einem dritten Betriebsmodus, welcher zum Verringern des Wirkstoffanteils der auszubringenden Spritzflüssigkeit eingestellt wird, erfolgt das Einspeisen des Wirkstoffs in den Umwälzkreislauf 16, währenddessen einzelne oder sämtliche Ausbringelemente 20a-20f, 22a-22f geöffnet sind oder die fluidleitenden Verbindungen zwischen dem Umwälzkreislauf 16 und einzelnen oder sämtlichen Ausbringelementen 20a-20f, 22a-22f freigegeben sind. Das Verhältnis der in den Umwälzkreislauf 16 eingespeisten Menge an Trägerflüssigkeit und Wirkstoff weicht im dritten Betriebsmodus temporär von dem für die Ausbringung beabsichtigten Mischungsverhältnis ab, wobei die Abweichung des Verhältnisses der in den Umwälzkreislauf 16 eingespeisten Menge an Trägerflüssigkeit und Wirkstoff von dem für die Ausbringung beabsichtigten Mischungsverhältnis durch eine übermäßig verminderte und unterproportionale Einspeisung des Wirkstoffs verursacht wird. Die übermäßig verminderte und unterproportionale Einspeisung des Wirkstoffs wird ab einem Schaltzeitpunkt verringert, sodass durch die einzelnen oder sämtlichen geöffneten oder freigegebenen Ausbringelemente 20a-20f, 22a-22f lediglich temporär eine Spritzflüssigkeit mit übermäßig vermindertem Wirkstoffanteil ausgebracht wird. Die Fördereinrichtungen 36a, 36b in dem Umwälzkreislauf 16 sind in dem dritten Betriebsmodus aktiviert.

In einem vierten Betriebsmodus, welcher zum Konstanthalten des Wirkstoffanteils der auszubringenden Spritzflüssigkeit eingestellt wird, entspricht das Verhältnis der in den Umwälzkreislauf 16 eingespeisten Menge an Trägerflüssigkeit und Wirkstoff dem für die Ausbringung beabsichtigten Mischungsverhältnis. Die Fördereinrichtungen 36a, 36b in dem Umwälzkreislauf 16 sind in dem vierten Betriebsmodus aktiviert.

In einem fünften Betriebsmodus, welcher zum Abschalten der Wirkstoffeinspeisung eingestellt wird, erfolgt kein Einspeisen des Wirkstoffs in den Umwälzkreislauf 16, währenddessen die Fördereinrichtungen 36a, 36b im Umwälzkreislauf 16 deaktiviert und gleichzeitig einzelne oder sämtliche Ausbringelemente 20a-20f, 22a-22f geöffnet sind oder die fluidleitenden Verbindungen zwischen dem Umwälzkreislauf 16 und einzelnen oder sämtlichen Ausbringelementen 20a-20f, 22a-22f freigegeben sind.

Zur Reinigung des Systems können die Fördereinrichtungen 36a, 36b beiunterbrochener Wirkstoffeinspeisung aktiviert werden, um den Umwälzkreislauf 16 zu spülen. Das Unterbrechen des Einspeisens des Wirkstoffs in den Umwälzkreislauf 16 kann auch mit einem Entfernen der Flüssigkeit aus dem Umwälzkreislauf 16 kombiniert werden. Das Entfernen der Flüssigkeit aus dem Umwälzkreislauf kann beispielsweise durch Verursachen einer Fließrichtungsumkehr innerhalb des Umwälzkreislaufs 16 erfolgen. Die Fließrichtungsumkehr innerhalb des Umwälzkreislaufs 16 wird durch ein Umkehren der Förderrichtung der Fördereinrichtungen 36a, 36b erreicht.

Zwischen dem Vorratsbehälter 12 und der Mischkammer 34 ist im Bereich der Fördereinrichtung 24 eine Bypassleitung 28 mit einer Sperreinrichtung 30 angeordnet, über welche ebenfalls eine Fließrichtungsumkehr realisiert werden kann.

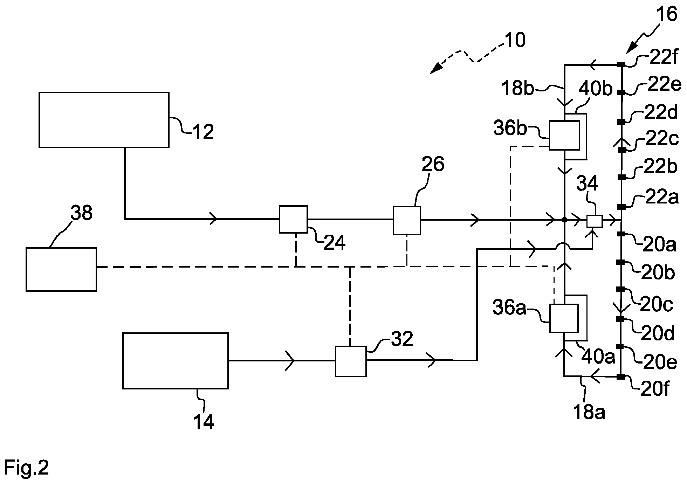

Die Fig. 2 zeigt ein Ausführungsbeispiel eines landwirtschaftlichen Spritzgeräts 10, welches auf eine Bypassleitung zwischen dem Vorratsbehälter 12 und der Mischkammer 34 verzichtet. Eine Fließrichtungsumkehr kann jedoch durch ein Umkehren der Förderrichtung der Fördereinrichtung 24 umgesetzt werden.

Außerdem ist in dem Umwälzkreislauf 16 in dem Bereich der Fördereinrichtungen 36a, 36b jeweils eine Bypassleitung 40a, 40b angeordnet. Durch die Bypassleitungen 40a, 40b kann eine Fließrichtungsumkehr innerhalb des Umwälzkreislaufs 16 erreicht werden, ohne ein Umkehren der Förderrichtung der Fördereinrichtungen 36a, 36b notwendig ist.

### Bezugszeichenliste

- 10: landwirtschaftliches Spritzgerät
- 12: Vorratsbehälter
- 14: Vorratsbehälter
- 16: Umwälzkreislauf
- 18a, 18b: Zirkulationspfade
- 20a-20f: Ausbringelemente
- 22a-22f: Ausbringelemente
- 24: Fördereinrichtung
- 26: Durchflussmesseinrichtung
- 28: Bypassleitung
- 30: Sperreinrichtung
- 32: Fördereinrichtung
- 34: Mischkammer
- 36a, 36b: Fördereinrichtungen
- 38: Steuerungseinrichtung
- 40a, 40b: Bypassleitungen

## Patentansprüche

1. Verfahren zum Ausbringen einer Spritzflüssigkeit mit einem landwirtschaftlichen Spritzgerät (10), mit den Schritten:
- Leiten einer Trägerflüssigkeit von einem Vorratsbehälter (12) für die Trägerflüssigkeit in einen Umwälzkreislauf (16), welcher mehrere Fördereinrichtungen (36a, 36b) aufweist und mit mehreren Ausbringelementen (20a-20f, 22a-22f) fluidleitend verbindbar ist, wobei der Umwälzkreislauf (16) mehrere Zirkulationspfade (18a, 18b) umfasst und die Ausbringelemente (20a-20f, 22a-22f) entlang der Zirkulationspfade (18a, 18b) angeordnet sind; und
- Erzeugen einer flüssigen Wirkstoffmischung durch Vermischen der Trägerflüssigkeit mit einem Wirkstoff; wobei die Wirkstoffmischung der Spritzflüssigkeit entspricht;
- Verhindern eines Rückflusses von dem Umwälzkreislauf (16) in den Vorratsbehälter (12) für die Trägerflüssigkeit;
- Einspeisen des Wirkstoffs in den Umwälzkreislauf (16); und
- Zirkulieren der flüssigen Wirkstoffmischung in dem Umwälzkreislauf (16), währenddessen der Rückfluss von dem Umwälzkreislauf (16) in den Vorratsbehälter (12) für die Trägerflüssigkeit verhindert ist.

2. Verfahren nach Anspruch 1,
**dadurch gekennzeichnet, dass** das Einspeisen des Wirkstoffs in den Umwälzkreislauf (16) in einem ersten Betriebsmodus des landwirtschaftlichen Spritzgeräts (10) erfolgt, währenddessen sämtliche Ausbringelemente (20a-20f, 22a-22f) geschlossen sind und/oder die fluidleitende Verbindung zwischen dem Umwälzkreislauf (16) und sämtlichen Ausbringelementen (20a-20f, 22a-22f) unterbrochen ist.

3. Verfahren nach Anspruch 2,**dadurch gekennzeichnet, dass** das Einspeisen des Wirkstoffs in den Umwälzkreislauf (16) in einem zweiten und/oder dritten Betriebsmodus des landwirtschaftlichen Spritzgeräts (10) erfolgt, währenddessen einzelne oder sämtliche Ausbringelemente (20a-20f, 22a-22f) geöffnet sind und/oder die fluidleitende Verbindung zwischen dem Umwälzkreislauf (16) und einzelnen oder sämtlichen Ausbringelementen (20a-20f, 22a-22f) freigegeben ist.

4. Verfahren nach Anspruch 3,
**dadurch gekennzeichnet, dass** in dem zweiten und/oder dritten Betriebsmodus des landwirtschaftlichen Spritzgeräts (10) das Verhältnis der in den Umwälzkreislauf (16) eingespeisten Menge an Trägerflüssigkeit und Wirkstoff zumindest temporär von dem für die Ausbringung beabsichtigten Mischungsverhältnis abweicht.

5. Verfahren nach Anspruch 4,
**dadurch gekennzeichnet, dass** in dem zweiten Betriebsmodus des landwirtschaftlichen Spritzgeräts (10) die Abweichung des Verhältnisses der in den Umwälzkreislauf (16) eingespeisten Menge an Trägerflüssigkeit und Wirkstoff von dem für die Ausbringung beabsichtigten Mischungsverhältnis durch eine übermäßige und/oder überproportionale Einspeisung des Wirkstoffs verursacht wird.

6. Verfahren nach Anspruch 5,
**dadurch gekennzeichnet, dass** die übermäßige und/oder überproportionale Einspeisung des Wirkstoffs in dem zweiten Betriebsmodus des landwirtschaftlichen Spritzgeräts (10) ab einem Schaltzeitpunkt verringert oder unterbrochen wird, sodass durch die einzelnen oder sämtlichen geöffneten und/oder freigegebenen Ausbringelemente (20a-20f, 22a-22f) zu keiner Zeit oder lediglich temporär eine Spritzflüssigkeit mit überhöhtem Wirkstoffanteil ausgebracht wird.

7. Verfahren nach Anspruch einem der Ansprüche 4 bis 6,**dadurch gekennzeichnet, dass** in dem dritten Betriebsmodus des landwirtschaftlichen Spritzgeräts (10) die Abweichung des Verhältnisses der in den Umwälzkreislauf (16) eingespeisten Menge an Trägerflüssigkeit und Wirkstoff von dem für die Ausbringung beabsichtigten Mischungsverhältnis durch eine übermäßig verminderte und/oder unterproportionale Einspeisung des Wirkstoffs verursacht wird.

8. Verfahren nach Anspruch 7,
**dadurch gekennzeichnet, dass** die übermäßig verminderte und/oder unterproportionale Einspeisung des Wirkstoffs in dem dritten Betriebsmodus des landwirtschaftlichen Spritzgeräts (10) ab einem Schaltzeitpunkt verringert oder unterbrochen wird, sodass durch die einzelnen oder sämtlichen geöffneten und/oder freigegebenen Ausbringelemente (20a-20f, 22a-22f) zu keiner Zeit oder lediglich temporär eine Spritzflüssigkeit mit übermäßig vermindertem Wirkstoffanteil ausgebracht wird.

9. Verfahren nach einem der Ansprüche 1 bis 8,
**gekennzeichnet durch** zumindest einen der folgenden Schritte:
- Erfassen des Mischungsverhältnisses und/oder des Mischungszustands der innerhalb des Umwälzkreislaufs (16) befindlichen Flüssigkeit;
- Speichern des Mischungsverhältnisses und/oder des Mischungszustands der innerhalb des Umwälzkreislaufs (16) befindlichen Flüssigkeit.

10. Verfahren nach einem der Ansprüche 1 bis 9,
**dadurch gekennzeichnet, dass** nach dem Unterbrechen des Einspeisens des Wirkstoffs in den Umwälzkreislauf (16) der folgende Schritt ausgeführt wird:
- Entfernen der Flüssigkeit aus dem Umwälzkreislauf (16), insbesondere durch Verursachen einer Fließrichtungsumkehr innerhalb des Umwälzkreislaufs (16).

11. Verfahren nach einem der Ansprüche 1 bis 10,
**dadurch gekennzeichnet, dass** vor dem Einspeisen und/oder während des Einspeisens des Wirkstoffs in den Umwälzkreislauf (16) zumindest einer der folgenden Schritte ausgeführt wird:
- Abrufen eines gespeicherten Mischungsverhältnisses und/oder eines gespeicherten Mischungszustands der innerhalb des Umwälzkreislaufs (16) befindlichen Flüssigkeit;
- Berücksichtigen des Mischungsverhältnisses und/oder des Mischungszustands der innerhalb des Umwälzkreislaufs (16) befindlichen Flüssigkeit bei der Ermittlung einer geeigneten Einspeisemenge an Wirkstoff.

12. Verfahren nach einem der Ansprüche 1 bis 11,
**dadurch gekennzeichnet, dass** in einem vierten Betriebsmodus des landwirtschaftlichen Spritzgeräts (10) das Verhältnis der in den Umwälzkreislauf (16) eingespeisten Menge an Trägerflüssigkeit und Wirkstoff zumindest temporär dem für die Ausbringung beabsichtigten Mischungsverhältnis entspricht.

13. Verfahren nach Anspruch 1,
**dadurch gekennzeichnet, dass** das Verursachen der Fließrichtungsumkehr innerhalb des Umwälzkreislaufs (16) durch ein Umkehren der Förderrichtung der mehreren Fördereinrichtungen (36a, 36b) oder durch die Freigabe einer Bypassleitung (40a, 40b) im Bereich der jeweiligen Fördereinrichtung (36a, 36b) erfolgt.

14. Verfahren nach Anspruch 1 oder 13,
**dadurch gekennzeichnet, dass** die mehreren Fördereinrichtungen (36a, 36b) in dem ersten, zweiten, dritten und/oder vierten Betriebsmodus des landwirtschaftlichen Spritzgeräts (10) aktiviert sind.

15. Verfahren nach einem der Ansprüche 1 oder 13 bis 14,
**dadurch gekennzeichnet, dass** in einem fünften Betriebsmodus des landwirtschaftlichen Spritzgeräts (10) kein Einspeisen des Wirkstoffs in den Umwälzkreislauf (16) erfolgt, währenddessen die mehreren Fördereinrichtungen (36a, 36b) deaktiviert und gleichzeitig einzelne oder sämtliche Ausbringelemente (20a-20f, 22a-22f) geöffnet sind und/oder die fluidleitende Verbindung zwischen dem Umwälzkreislauf (16) und einzelnen oder sämtlichen Ausbringelementen (20a-20f, 22a-22f) freigegeben ist.

16. Landwirtschaftliches Spritzgerät (10), mit
- einem Vorratsbehälter (12) für eine Trägerflüssigkeit;
- einem Vorratsbehälter (14) für einen Wirkstoff;
- mehreren Ausbringelementen (20a-20f, 22a-22f) zu Ausbringen einer Spritzflüssigkeit; und
- einem Umwälzkreislauf (16), welcher mit dem Vorratsbehälter (12) für die Trägerflüssigkeit, mit dem Vorratsbehälter (14) für den Wirkstoff und den Ausbringelementen (20a-20f, 22a-22f) fluidleitend verbindbar ist, wobei der Umwälzkreislauf (16) mehrere Fördereinrichtungen (36a, 36b) aufweist, und wobei der Umwälzkreislauf (16) mehrere Zirkulationspfade (18a, 18b) umfasst und die Ausbringelemente (20a-20f, 22a-22f) entlang der Zirkulationspfade (18a, 18b) angeordnet sind, und
- einer Steuerungseinrichtung (38), welche mit den Fördereinrichtungen (36a, 36b) signalleitend verbunden ist,
wobei die Steuerungseinrichtung eingerichtet ist zu bewirken, dass das landwirtschaftliche Spritzgerät (10) das Verfahren zum Ausbringen einer Spritzflüssigkeit nach einem der vorstehenden Ansprüche ausführt.

## Claims

1. Method for applying a spray liquid with an agricultural sprayer (10), having the steps of:
- conducting a carrier liquid from a storage container (12) for the carrier liquid into a circulating circuit (16) which has a plurality of conveying devices (36a, 36b) and is connectable in a fluid-conducting manner to a plurality of application elements (20a-20f, 22a-22f), wherein the circulating circuit (16) comprises a plurality of circulation paths (18a, 18b) and the application elements (20a-20f, 22a-22f) are arranged along the circulation paths (18a, 18b); and
- producing a liquid active substance mixture by mixing the carrier liquid with an active substance; wherein the active substance mixture corresponds to the spray liquid;
- preventing a backflow from the circulating circuit (16) into the storage container (12) for the carrier liquid;
- feeding the active substance into the circulating circuit (16); and
- circulating the liquid active substance mixture in the circulating circuit (16) while the backflow from the circulating circuit (16) into the storage container (12) for the carrier liquid is prevented.

2. Method according to Claim 1,
**characterized in that** the active substance is fed into the circulating circuit (16) in a first operating mode of the agricultural sprayer (10) while all the application elements (20a-20f, 22a-22f) are closed and/or the fluid-conducting connection between the circulating circuit (16) and all the application elements (20a-20f, 22a-22f) is interrupted.

3. Method according to Claim 2,
**characterized in that** the active substance is fed into the circulating circuit (16) in a second and/or third operating mode of the agricultural sprayer (10) while individual or all the application elements (20a-20f, 22a-22f) are open and/or the fluid-conducting connection between the circulating circuit (16) and individual or all the application elements (20a-20f, 22a-22f) is opened up.

4. Method according to Claim 3,
**characterized in that**, in the second and/or third operating mode of the agricultural sprayer (10), the ratio of the quantity of carrier liquid and active substance fed into the circulating circuit (16) at least temporarily differs from the mixing ratio intended for the application.

5. Method according to Claim 4,
**characterized in that**, in the second operating mode of the agricultural sprayer (10), the difference of the ratio of the quantity of carrier liquid and active substance fed into the circulating circuit (16) from the mixing ratio intended for the application is caused by an excessive and/or disproportionate feeding-in of the active substance.

6. Method according to Claim 5,
**characterized in that** the excessive and/or disproportionate feeding-in of the active substance in the second operating mode of the agricultural sprayer (10) is reduced or interrupted from a switching time such that a spray liquid with an excessive proportion of active substance is applied only temporarily, if at any time, by the individual or all the open and/or opened-up application elements (20a-20f, 22a-22f).

7. Method according to one of Claims 4 to 6,
**characterized in that**, in the third operating mode of the agricultural sprayer (10), the difference of the ratio of the quantity of carrier liquid and active substance fed into the circulating circuit (16) from the mixing ratio intended for the application is caused by an excessively reduced and/or underproportional feeding-in of the active substance.

8. Method according to Claim 7,
**characterized in that** the excessively reduced and/or underproportional feeding-in of the active substance in the third operating mode of the agricultural sprayer (10) is reduced or interrupted from a switching time such that a spray liquid with an excessively reduced proportion of active substance is applied only temporarily, if at any time, by the individual or all the open and/or opened-up application elements (20a-20f, 22a-22f).

9. Method according to one of Claims 1 to 8,
**characterized by** at least one of the following steps:
- detecting the mixing ratio and/or the mixing state of the liquid located within the circulating circuit (16) ;
- storing the mixing ratio and/or the mixing state of the liquid located within the circulating circuit (16).

10. Method according to one of Claims 1 to 9,
**characterized in that**, after interruption of the feeding-in of the active substance into the circulating circuit (16), the following step is carried out:
- removing the liquid from the circulating circuit (16), in particular by causing a reversal of the flow direction within the circulating circuit (16).

11. Method according to one of Claims 1 to 10,
**characterized in that**, before the feeding-in and/or during the feeding-in of the active substance into the circulating circuit (16), at least one of the following steps is carried out:
- retrieving a stored mixing ratio and/or a stored mixing state of the liquid located within the circulating circuit (16);
- taking into consideration the mixing ratio and/or the mixing state of the liquid located within the circulating circuit (16) in the determination of a suitable feeding-in quantity of active substance.

12. Method according to one of Claims 1 to 11,
**characterized in that**, in a fourth operating mode of the agricultural sprayer (10), the ratio of the quantity of carrier liquid and active substance fed into the circulating circuit (16) corresponds at least temporarily to the mixing ratio intended for the application.

13. Method according to Claim 1,
**characterized in that** the causing of the reversal of the flow direction within the circulating circuit (16) takes place by reversing the conveying direction of the plurality of conveying devices (36a, 36b) or by opening up of a bypass line (40a, 40b) in the region of the respective conveying device (36a, 36b).

14. Method according to Claim 1 or 13,
**characterized in that** the plurality of conveying devices (36a, 36b) are activated in the first, second, third and/or fourth operating mode of the agricultural sprayer (10).

15. Method according to one of Claims 1 or 13 to 14,
**characterized in that**, in a fifth operating mode of the agricultural sprayer (10), the active substance is not fed into the circulating circuit (16) while the plurality of conveying devices (36a, 36b) are deactivated and at the same time individual or all the application elements (20a-20f, 22a-22f) are open and/or the fluid-conducting connection between the circulating circuit (16) and individual or all the application elements (20a-20f, 22a-22f) is opened up.

16. Agricultural sprayer (10), having
- a storage container (12) for a carrier liquid;
- a storage container (14) for an active substance;
- a plurality of application elements (20a-20f, 22a-22f) for applying a spray liquid; and
- a circulating circuit (16) which is connectable in a fluid-conducting manner to the storage container (12) for the carrier liquid, to the storage container (14) for the active substance and to the application elements (20a-20f, 22a-22f), wherein the circulating circuit (16) has a plurality of conveying devices (36a, 36b), and wherein the circulating circuit (16) comprises a plurality of circulation paths (18a, 18b) and the application elements (20a-20f, 22a-22f) are arranged along the circulation path (18a, 18b), and
- a control device (38) which is connected in a signal-conducting manner to the conveying devices (36a, 36b),
wherein the control device is designed to trigger the agricultural sprayer (10) to carry out the method for applying a spray liquid according to one of the preceding claims.

## Revendications

1. Procédé d'application d'un liquide de pulvérisation à l'aide d'un pulvérisateur agricole (10), comportant les étapes suivantes :
- guidage d'un liquide porteur à partir d'un réservoir (12) de liquide porteur dans un circuit de circulation (16), lequel comprend plusieurs dispositifs de refoulement (36a, 36b) et peut être relié de manière fluidique à plusieurs éléments d'application (20a-20f, 22a-22f), le circuit de circulation (16) comportant plusieurs voies de circulation (18a, 18b) et les éléments d'application (20a-20f, 22a-22f) étant disposés le long des voies de circulation (18a, 18b) ; et
- production d'un mélange de substance active liquide par mélange du liquide porteur avec une substance active ; le mélange de substance active correspondant au liquide de pulvérisation ;
- prévention d'un reflux à partir du circuit de circulation (16) dans le réservoir (12) de liquide porteur ;
- introduction de la substance active dans le circuit de circulation (16) ; et
- circulation du mélange de substance active liquide dans le circuit de circulation (16), tandis que le reflux à partir du circuit de circulation (16) dans le réservoir (12) de liquide porteur est empêché.

2. Procédé selon la revendication 1,
**caractérisé en ce que** l'introduction de la substance active dans le circuit de circulation (16) s'effectue dans un premier mode de fonctionnement du pulvérisateur agricole (10), tandis que tous les éléments d'application (20a-20f, 22a-22f) sont fermés et/ou la liaison fluidique entre le circuit de circulation (16) et tous les éléments d'application (20a-20f, 22a-22f) est interrompue.

3. Procédé selon la revendication 2,
**caractérisé en ce que** l'introduction de la substance active dans le circuit de circulation (16) s'effectue dans un deuxième et/ou un troisième mode de fonctionnement du pulvérisateur agricole (10), tandis que des éléments d'application individuels ou tous les éléments d'application (20a-20f, 22a-22f) sont ouverts et/ou la liaison fluidique entre le circuit de circulation (16) et des éléments d'application individuels ou tous les éléments d'application (20a-20f, 22a-22f) est libérée.

4. Procédé selon la revendication 3,
**caractérisé en ce que**, dans le deuxième et/ou le troisième mode de fonctionnement du pulvérisateur agricole (10), le rapport de la quantité de liquide porteur introduite dans le circuit de circulation (16) à la substance active diffère au moins temporairement du rapport de mélange prévu pour l'application.

5. Procédé selon la revendication 4,
**caractérisé en ce que**, dans le deuxième mode de fonctionnement du pulvérisateur agricole (10), la différence entre le rapport de la quantité de liquide porteur introduite dans le circuit de circulation (16) à la substance active et le rapport de mélange prévu pour l'application est provoquée par une introduction excessive et/ou proportionnellement supérieure de la substance active.

6. Procédé selon la revendication 5,
**caractérisé en ce que** l'introduction excessive et/ou proportionnellement supérieure de la substance active est réduite ou interrompue dans le deuxième mode de fonctionnement du pulvérisateur agricole (10) à partir d'un instant de commutation, de sorte qu'à aucun instant ou seulement temporairement un liquide de pulvérisation à proportion en substance active accrue ne soit appliqué au moyen des éléments d'application individuels ou de tous les éléments d'application (20a-20f, 22a-22f) ouverts et/ou libérés.

7. Procédé selon l'une des revendications 4 à 6,
**caractérisé en ce que**, dans le troisième mode de fonctionnement du pulvérisateur agricole (10), la différence entre le rapport de la quantité de liquide porteur introduite dans le circuit de circulation (16) à la substance active et le rapport de mélange prévu pour l'application est provoquée par une introduction réduite de manière excessive et/ou proportionnellement inférieure de la substance active.

8. Procédé selon la revendication 7,
**caractérisé en ce que** l'introduction réduite de manière excessive et/ou proportionnellement inférieure de la substance active est réduite ou interrompue dans le troisième mode de fonctionnement du pulvérisateur agricole (10) à partir d'un instant de commutation, de sorte qu'à aucun instant ou seulement temporairement un liquide de pulvérisation à proportion en substance active réduite de manière excessive ne soit appliqué au moyen des éléments d'application individuels ou de tous les éléments d'application (20a-20f, 22a-22f) ouverts et/ou libérés.

9. Procédé selon l'une des revendications 1 à 8,
**caractérisé par** au moins l'une des étapes suivantes :
- détection du rapport de mélange et/ou de l'état de mélange du liquide se trouvant à l'intérieur du circuit de circulation (16) ;
- mise en mémoire du rapport de mélange et/ou de l'état de mélange du liquide se trouvant à l'intérieur du circuit de circulation (16).

10. Procédé selon l'une des revendications 1 à 9,
**caractérisé en ce qu'**après l'interruption de l'introduction de la substance active dans le circuit de circulation (16), l'étape suivante est mise en œuvre :
- retrait du liquide du circuit de circulation (16), en particulier par le fait qu'une inversion du sens d'écoulement à l'intérieur du circuit de circulation (16) est provoquée.

11. Procédé selon l'une des revendications 1 à 10,
**caractérisé en ce qu'**avant l'introduction et/ou pendant l'introduction de la substance active dans le circuit de circulation (16), au moins l'une des étapes suivantes est mise en œuvre :
- extraction d'un rapport de mélange mis en mémoire et/ou d'un état de mélange mis en mémoire du liquide se trouvant à l'intérieur du circuit de circulation (16) ;
- pris en compte du rapport de mélange et/ou de l'état de mélange du liquide se trouvant à l'intérieur du circuit de circulation (16) lors de la détermination d'une quantité appropriée d'introduction de substance active.

12. Procédé selon l'une des revendications 1 à 11,
**caractérisé en ce que**, dans un quatrième mode de fonctionnement du pulvérisateur agricole (10), le rapport de la quantité de liquide porteur introduite dans le circuit de circulation (16) à la substance active correspond au moins temporairement au rapport de mélange prévu pour l'application.

13. Procédé selon la revendication 1,
**caractérisé en ce que** le fait de provoquer l'inversion de sens d'écoulement à l'intérieur du circuit de circulation (16) s'effectue par une inversion du sens de refoulement des plusieurs dispositifs de refoulement (36a, 36b) ou par la libération d'une conduite de dérivation (40a, 40b) dans la région du dispositif de refoulement (36a, 36b) respectif.

14. Procédé selon la revendication 1 ou 13,
**caractérisé en ce que** les plusieurs dispositifs de refoulement (36a, 36b) sont activés dans le premier, deuxième, troisième et/ou quatrième mode de fonctionnement du pulvérisateur agricole (10).

15. Procédé selon l'une des revendications 1 ou 13 à 14,
**caractérisé en ce que**, dans un cinquième mode de fonctionnement du pulvérisateur agricole (10), aucune introduction de la substance active dans le circuit de circulation (16) n'est effectuée, tandis que les plusieurs dispositifs de refoulement (36a, 36b) sont désactivés et simultanément des éléments d'application individuels ou tous les éléments d'application (20a-20f, 22a-22f) sont ouverts et/ou la liaison fluidique entre le circuit de circulation (16) et des éléments d'application individuels ou tous les éléments d'application (20a-20f, 22a-22f) est libérée.

16. Pulvérisateur agricole (10), comportant
- un réservoir (12) de liquide porteur ;
- un réservoir (14) de substance active ;
- plusieurs éléments d'application (20a-20f, 22a-22f) servant à l'application d'un liquide de pulvérisation ; et
- un circuit de circulation (16), lequel peut être relié de manière fluidique au réservoir (12) de liquide porteur, au réservoir (14) de substance active et aux éléments d'application (20a-20f, 22a-22f), le circuit de circulation (16) comprenant plusieurs dispositifs de refoulement (36a, 36b), et le circuit de circulation (16) comportant plusieurs voies de circulation (18a, 18b) et les éléments d'application (20a-20f, 22a-22f) étant disposés le long des voies de circulation (18a, 18b), et
- un dispositif de commande (38), lequel est relié aux dispositifs de refoulement (36a, 36b) de manière à acheminer des signaux, le dispositif de commande étant conçu pour amener le pulvérisateur agricole (10) à mettre en œuvre le procédé d'application d'un liquide de pulvérisation selon l'une des revendications précédentes.
